Europäisches Patentamt

European Patent Office

Office européen des brevets

(19)

(11) Veröffentlichungsnummer: **0 019 816**
**B1**

(12) **EUROPÄISCHE PATENTSCHRIFT**

(45) Veröffentlichungstag der Patentschrift: **16.11.83**

(51) Int. Cl.³: **G 01 F 23/26**

(21) Anmeldenummer: **80102734.3**

(22) Anmeldetag: **16.05.80**

(54) Flexibler, kontinuierlicher Füllstandsmesser für elektrisch leitende Flüssigkeiten.

(30) Priorität: **31.05.79 DE 2922093**

(43) Veröffentlichungstag der Anmeldung:
**10.12.80 Patentblatt 80/25**

(45) Bekanntmachung des Hinweises auf die Patenterteilung:
**16.11.83 Patentblatt 83/46**

(84) Benannte Vertragsstaaten:
**BE DE FR GB IT LU NL**

(56) Entgegenhaltungen:
**DE - A - 2 133.318**

**SIEMENS ZEITSCHRIFT, Band 49, Nr. 2, 1975
Erlangen, DE, R. HANS: "Natrium-
Füllstandsmesseeinrichtungen für
Kernkraftwerke", Seiten 73-77**

(73) Patentinhaber: **INTERATOM Internationale
Atomreaktorbau GmbH
Friedrich-Ebert-Strasse
D-5060 Bergisch Gladbach 1 (DE)**

(72) Erfinder: **Hans, Rainer
An der Wolfsmaar 6
D-5060 Bergisch Gladbach 3 (DE)**
Erfinder: **Cremer, Dieter
Immekeppelerteich 8
D-5063 Overath (DE)**

(74) Vertreter: **Mehl, Ernst, Dipl.-Ing. et al,
Postfach 22 01 76
D-8000 München 22 (DE)**

## Flexibler, kontinuierlicher Füllstandsmesser für elektrisch leitende Flüssigkeiten

Die vorliegende Erfindung betrifft einen kontinuierlichen Füllstandsmesser nach dem Induktionsprinzip für elektrisch leitende Flüssigkeiten entsprechend dem Oberbegriff des Anspruchs 1 oder 3. Einen derartigen Füllstandsmesser hat die Anmelderin in der DE—C—22 10 297 beschrieben. Er besteht neben den zur Auswertung der gewonnenen Meßsignale erforderlichen elektronischen Geräten, die an sich bekannt und nicht Gegenstand dieser Erfindung sind aus einem starren, z.B. aus Weicheisen oder zum Einsatz bei höheren Temperaturen aus austenitischem Stahl hergestellten Kern, der an seiner Oberfläche mit nach Art eines zweigängigen Schraubgewindes eingefrästen Nuten versehen ist. In diesen Nuten ist je eine Leitung eingelegt, die die Primär- bzw. Sekundärspule bildet. Die Vorrichtung kann entweder unmittelbar in eine elektrisch leitende Flüssigkeit eintauschen oder aber zum Schutz vor chemischem Angriff durch die Flüssigkeit in einem Schutzrohr geführt sein, das sich zweckmäßigerweise über die gesamte Höge des zu überwachenden Flüssigkeitsbehälters erstreckt. Derartige Füllstandsmesser sind z.B. zur Überwachung des Füllstandes von Behältern in mit flüssigem Natrium betriebenen Kernenergieanlagen eingesetzt worden und haben meßtechnisch die in sie gesetzten Erwartungen erfüllt. Als weniger befriedigend erwies sich ihre Handhabbarkeit.

Zum Einführen der Füllstandsmesser in die oft mehrere Meter langen Schutzrohre bzw. zum Herausziehen aus denselben ist vor der Öffnung des Führungsrohres ein erheblicher, der Länge des Füllstandsmessers entsprechender freier Raum vonnöten. Sind die Füllstandsmesser (z.B. infolge Einsatzes im Primärkreislauf eines Kernreaktors) aufaktiviert worden, wirft die sichere Handhabung solcher langen Objekte zusätzliche Probleme auf. Die Starrheit des Füllstandsmessers erfordert darüberhinaus einen geradlinigen Verlauf der Führungsrohre, der sich mitunter nur unter Schwierkeiten herstellen läßt und auch bei Durchführungen durch Abschirmungen unerwünscht ist, da dadurch der sich geradlinig ausbreitenden Strahlung ein Weg gebahnt wird. Im Bereich der Zuführungen, in dem Keine Messungen vorgenommen werden sollen, ist bereits früher ein flexibler Handhabungsschlauch verwendet worden, der freilich nicht mit Spulen versehen war und somit keinen Teil des eigentlichen Füllstandsmessers bildets (vergl. Siemens Zeitschrift, Band 49, Nr. 2 (1975), 5.73—77).

Aufgabe der vorliegenden Erfindung ist ein konitnuierlicher Füllstandsmesser für elektrisch leitenden Flüssigkeiten, der den oben genannten Beschränkungen nicht unterliegt.

Die Lösung dieser Aufgabe basiert auf der flexiblen Ausbildung des die Spulen leiter tragenden Kerns, so daß er auch in gekrümmte Führungsrohre (z.B. in Pumpengehäuse) eingeführt werden kann, bzw. zu seiner Handhabung vor der Öffnung des Rührungsrohres keine besonderen Anforderungen an die Größe des zur Verfügung stehenden Raumes stellt.

Die Ansprüche 1 und 2 bzw. 3 bis 5 beschreiben zwei mögliche Ausführungsformen der Erfindung. Wellschläuche und aus Draht gewickelte flexible zylindrische Körper sind (letztere z.B. als Hohlwellen) bekannte Elemente, die sich unschwer und auch in der geforderten zweigängigen Form und aus austenitischem Stahl herstellen lassen, der zum Einsatz in flüssigmetallführenden Anlagen und bei hohen Temperaturen erforderlich ist. Die Anordnung der Spulenleitungen in des zwischen den Drähten entstehenden Ausnehmungen oder Nuten, bzw. in den Wellentälern gewährleistet ihre dauerhafte Fixierung in dem gewünschten Abstand. Dabei ist es besonders vorteilhaft, diese Nuten bzw. Wellentäler wie die Spulen selbst zweigängig zu machen, um jeder Leitung eine definierte Lage auf der Staboberfläche zu geben. Sind die Spulenleitungen aus sehr dünnem Draht, der über die Kontur der Drähte, bzw. Wellenberge nicht hervorragt, ist auch ihr Schutz gegen mechanische Beschädigung beim Einschieben des Füllstandsmessers in ein Führungsrohr gegeben. Sind die Spulendrähte dagegen von größerem Durchmesser, empfiehlt sich die im Anspruch 5 vorgeschlagene Ausgestaltung, bei der einzelne Drähte der Hohlwelle derart vergrößert werden, daß sie Stege bilden, zwischen denen die Spulendrähte geschützt untergebracht werden können und die eine sichere Führung des Füllstandsmessers in einem Schutzrohr gewährleisten.

Ein solcher flexibler Füllstandsmesser kann auch auf Trommeln aufgewickelt werden, was seinen Transport und seine Handhabung weiter erleichtert, insbesondere im aufaktivierten Zustand.

Ausführungsbeispiele der Erfindung sind in der Zeichnung dargestellt, und zwar zeigt

Fig. 1 den Füllstandsmesser im Axial-Längsschnitt an seinem Einsatzort,

Fig. 2 in vergrößertem Maßstab eine erste Ausführungsform, teils im Schnitt und teils in der Ansicht und

Fig. 3 eine zweite Ausführungsform, ebenfalls in vergrößertem Maßstab und teils im Schnitt und teils in der Ansicht.

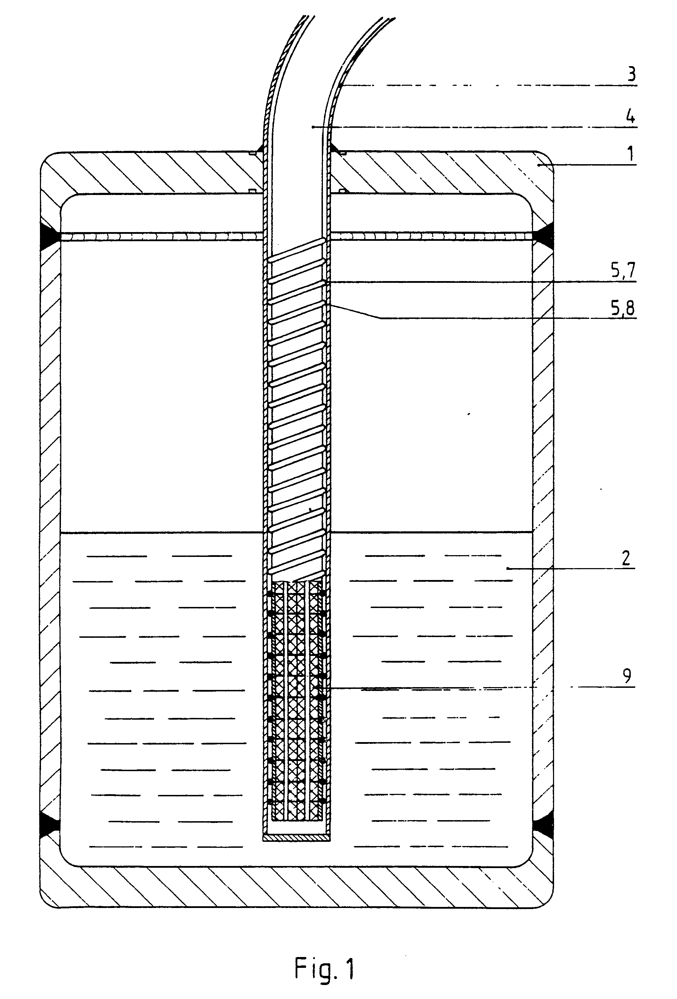

Die Fig. 1 zeigt einen Behälter 1, der eine elektrisch leitende Flüssigkeit 2 enthält. In der Wand des Behälters 1 ist ein Sackrohr 3 als Schutzrohr für den Füllstandsmesser eingeschweißt. Dieses kann wie angedeutet zum Teil gekrümmt sein; der Füllstandsmesser folgt, da flexibel, derartigen Krümmungen. Der Füllstandsmesser besteht aus einem hohlen Kern 4, der an seiner Außenseite nach Art einer zweigängigen Schraube mit Nuten oder Vertiefungen 5 versehen ist. In den Nuten 5 sind eine Primär- 7 und eine Sekundärspule 8, beispielsweise aus metallummanteltem mineralisoliertem Draht angeordnet. Die Rückleitungen der Spulen 7 und 8 sind im Inneren des Kerns 4 nach außen zu einem hier nicht dargestellten Anzeigegerät geführt und werden zweckmäßigerweise durch Halterungen 9, beispielsweise aus Keramik auf Mitte gehalten.

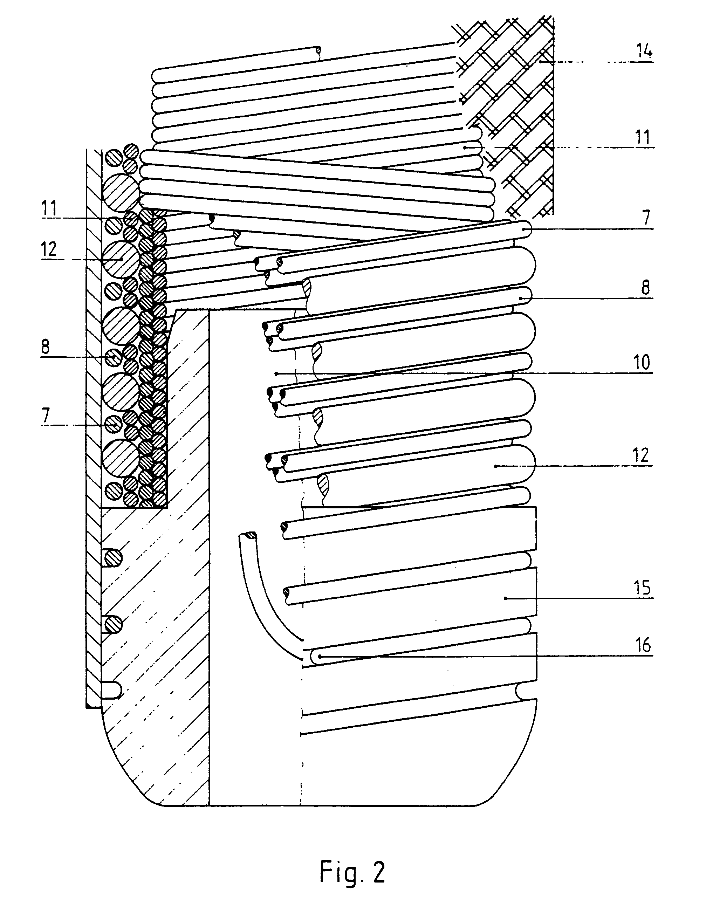

In der Ausführungsform der Fig. 2 besteht der Kern 4 aus einem zweigängig und in mehreren gegenläufigen Lagen aus Draht 11 gewickelten hohlen Stab 10. In der äußersten Lage ist ein Teil 12 der Drähte von vergrößertem Durchmesser, die dadurch über die Oberfläche des Stabes hervorstehen. Ihr Durchmesser und ihr Abstand sind so gewählt, daß zwischen ihnen die Spulenleitungen 7 bzw. 8 Platz finden und beim Bewegen des Stabes in dem Schutzrohr 3 gegen Beschädigungen geschützt sind.

An seinem unteren Ende ist der Füllstandsmesser mit einem festen Endstück 15 versehen, das Bohrungen 16 aufweist, durch die die Leitungen der hier endenden Spulen in das Innere des Stabes geführt werden.

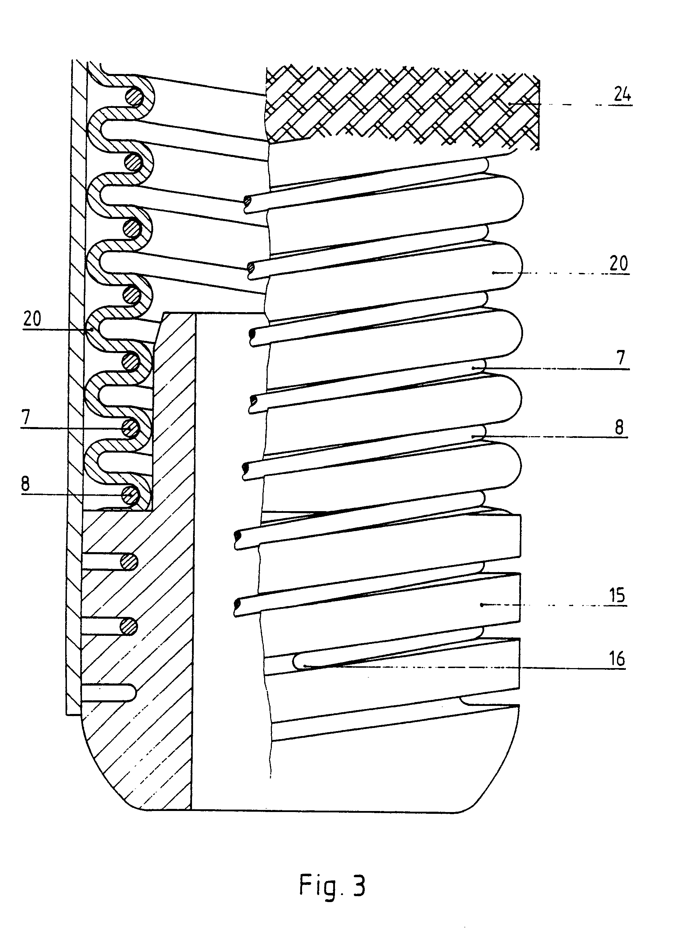

In der Ausführungsform der Fig. 3 besteht der Kern 4 aus einem flexiblen Wellschlauch 20, der ebenfalls zweigängig ausgeführt ist und dessen Wellen so bemessen sind, daß die Leitungen 7, 8 geschützt gehaltert werden. Diese Ausführungsform kann ebenfalls mit einem Endstück von der in der Fig. 1 gezeigten Art versehen sein.

Der Schutz beider Ausführungsformen kann darüberhinaus durch eine Metalldrahtumflechtung 14, bzw. 24 verbessert werden.

## Patentansprüche

1. Kontinuierlicher, nach dem Induktionsprinzip arbeitender Füllstandsmesser für elektrisch leitende Flüssigkeiten, mit einer von einem konstanten Wechselstrom erregten Primärspule (7), einer Sekundärspule (8), in die von der Primärspule eine vom zu überwachenden Füllstand abhängige Spannung induziert wird, und einem Kern (4), dessen Wandung mit einer wendelförmig verlaufenden Ausnehmung (5) versehen ist, in der die Leiter der Primär- und der Sekundärspule in Form einer zweigängigen Wicklung angeordnet sind, dadurch gekennzeichnet, daß der Kern (4) aus einem flexiblen Wellschlauch (20) besteht, in dessen Wellentäler die Spulenleiter (7, 8) eingelegt sind.

2. Füllstandsmesser nach Anspruch 1, dadurch gekennzeichnet, daß der Wellschlauf (20) zweigängig gewellt ist.

3. Kontinuierlicher, nach dem Induktionsprinzip arbeitender Füllstandsmesser für elektrisch leitenden Flüssigkeiten, mit einer von einem konstanten Wechselstrom erregten Primärspule (7), einer Sekundärspule (8), in die von der Primärspule eine vom zu überwachenden Füllstand abhängige Spannung induziert wird, und einem Kern (4), dessen Wandung mit einer wendelförmig verlaufenden Ausnehmung (5) versehen ist, in der die Leiter der Primär- und der Sekundärspule in Form einer zweigängigen Wicklung angeordnet sind, dadurch gekennzeichnet, daß der Kern (4) aus einer flexiblen Drahtwicklung besteht, und daß die die Spulenleiter aufnehmende Ausnehmung (5) zwischen den im Abstand zueinander verlaufenden Wicklungsgängen (12) der Drahtwicklung gebildet ist.

4. Füllstandsmesser nach Anspruch 3, dadurch gekennzeichnet, daß die Drahtwicklung zweigängig gewickelt ist.

5. Füllstandsmesser nach Anspruch 3 oder 4, dadurch gekennzeichnet, daß die Drahtwicklung mehrlagig gewickelt ist und daß ein Teil der Drähte der äußersten Lage (12) von vergrößertem Durchmesser und in gleichmäßigem Abstand gewickelt ist derart, daß der Überstand der Drähte und ihr Abstand zueinander größer sind als der Durchmesser der Spulenleitungen (7, 8).

## Revendications

1. Détecteur de niveau continu, fonctionnant suivant le principe d'induction, pour des liquides électriquement conducteurs, comprenant une bobine primaire (7) excitée par un courant alternatif constant, une bobine secondaire (8) dans laquelle la bobine primaire induit une tension qui dépend du niveau à surveiller, et un noyau (4) dont la paroi est munie d'un évidement hélicoïdal (5) dans lequel les conducteurs des bobines primaire et secondaire sont disposés sous forme d'un enroulement imbriqué parallèle double, caractérisé en ce que le noyau (4) est constitué d'un tube ondulé flexible (20), dans les creux des ondulations duquel sont introduits les conducteurs des bobines (7, 8).

2. Détecteur de niveau suivant la revendication 1, caractérisé en ce que le tube ondulé (20) est ondulé suivant un filet double.

3. Détecteur de niveau continu, fonctionnant suivant le principe d'induction, pour des liquides électriquement conducteurs, comprenant une bobine primaire (7) excitée par un courant alternatif constant, une bobine secondaire (8) dans laquelle la bobine primaire induit une tension qui dépend du niveau à surveiller, et un noyau (4) dont la paroi est munie d'un évidement hélicoïdal (5) dans lequel les conducteurs des bobines primaire et secondaire sont disposés sous forme d'un enroulement imbriqué parallèle double, caractérisé en ce que le noyau (4) est constitué d'un enroulement en fil flexible et en ce que l'évidement (5) recevant les conducteurs de bobines est formé entre les spires (12) non jointives de l'enroulement en fil.

4. Détecteur de niveau selon la revendication 3, caractérisé en ce que l'enroulement en fil est enroulé suivant un enroulement parallèle d'ordre deux.

5. Détecteur de niveau selon la revendication 2, 3 ou 4, caractérisé en ce que l'enroulement en fil est enroulé suivant plusieurs couches, en ce qu'une partie des fils de la couche extérieure (12) de diamètre agrandi est enroulée suivant un écartement uniforme de manière à ce que la partie en saillie des fils et leur distance les uns par rapport aux autres soient plus grandes que le diamètre des conducteurs de bobines (7, 8).

**Claims**

1. A continuous level measuring device for electrically conductive liquids which operates in accordance with the induction principle and which has a primary coil (7) excited by a constant alternating current, a secondary coil (8) in which a voltage which is dependent upon the level to be monitored is induced by the primary coil, and which has a core (4) the wall of which is provided with a helically-running recess (5) in which the conductors of the primary and secondary coils are arranged in the form of a double-thread winding, characterised in that the core (4) consists of a flexible corrugated tube (20) into the troughs of the corrugations of which the coil conductors (7, 8) are inserted.

2. A level measuring device as claimed in Claim 1, characterised in that the corrugated tube (20) is corrugated in the form of a double-thread.

3. A continuous level measuring device for electrically conductive liquids which operates in accordance with the induction principle and which has a primary coil (7) excited by a constant alternating current, a secondary coil (8) in which a voltage which is dependent upon the level to be monitored, is induced by the primary coil, and which has a core (4), the wall of which is provided with a helically-running recess (5) in which the conductors of the primary and secondary coil are arranged in the form of a double-thread winding, characterised in that the core (4) consists of a flexible wire winding; and that the recess (5) accommodating the coil conductors is formed between the turns (12) of the wire winding which are spaced from one another.

4. A level measuring device as claimed in Claim 3, characterised in that the wire winding is wound in the form of a double-thread.

5. A level measuring device as claimed in Claim 3 or Claim 4, characterised in that the wire winding is wound so as to form a plurality of layers; and that a part of the wires of the outermost layer (12) is of an increased diameter and wound at a constant spacing in such a way that the projection of the wires and their spacing from one another are greater than the diameter of the coil conductors (7, 8).

Fig. 1

Fig. 2

Fig. 3